(19) Europäisches Patentamt
European Patent Office
Office européen des brevets

(11) **EP 4 675 317 A1**

(12) **EUROPEAN PATENT APPLICATION**
published in accordance with Art. 153(4) EPC

(43) Date of publication:
07.01.2026 Bulletin 2026/02

(21) Application number: 24800157.0

(22) Date of filing: 22.03.2024

(51) International Patent Classification (IPC):
$G01T\ 1/163$ (2006.01)   $G01T\ 1/167$ (2006.01)
$G01T\ 7/00$ (2006.01)   $G06N\ 3/04$ (2023.01)
$G06N\ 3/08$ (2023.01)

(52) Cooperative Patent Classification (CPC):
G01T 1/163; G01T 1/167; G01T 7/00; G06N 3/04;
G06N 3/08

(86) International application number:
PCT/KR2024/003590

(87) International publication number:
WO 2024/228469 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.05.2023 KR 20230057624

(71) Applicant: Korea Hydro & Nuclear Power Co., Ltd
Gyeongju-si, Gyeongsangbuk-do 38120 (KR)

(72) Inventors:
• CHO, Moon Hyung
  Daejeon 34101 (KR)
• KIM, Hyeongjin
  Daejeon 34101 (KR)

(74) Representative: De Vries & Metman
Overschiestraat 180
1062 XK Amsterdam (NL)

(54) **GAMMA SPECTRUM SEPARATION SYSTEM AND METHOD FOR WHOLE BODY CONTAMINATION (WBC) TEST EQUIPMENT FOR GENERATING ARTIFICIAL NEURAL NETWORK (ANN) LEARNING DATA**

(57) Proposed is a gamma spectrum separation system for a whole-body counter for generating artificial neural network training data by separating a single-nuclide spectrum from a spectrum in which multiple nuclides are mixed. According to the present disclosure, the present disclosure includes an efficiency calculation unit configured to obtain an efficiency for each of channels A, B, and C of a whole-body counter, a count rate contribution amount calculation unit configured to calculate a count rate contribution amount of each channel by multiplying the efficiency of each channel by a value obtained by multiplying a mixed source for generating the artificial neural network training data by a gamma-ray emission rate of each nuclide, and a normalization unit configured to subtract the count rate contribution amount from the count rate of each channel measured by the nuclide and then perform normalization to obtain a normalized spectrum of the nuclide. Accordingly, a single-nuclide spectrum can be separated from a spectrum in which multiple nuclides are mixed, and the single-nuclide spectrum can be used to generate a synthetic spectrum for artificial intelligence training.

efficiency calculation unit — 100

count rate contribution amount calculation unit — 200

normalization unit — 300

10

FIG. 6

**Description**

**Technical Field**

The present disclosure relates to a gamma spectrum separation system for a whole-body counter (WBC) for generating artificial neural network (ANN) training data. More particularly, the present disclosure relates to a gamma spectrum separation system for a whole-body counter (WBC) for generating artificial neural network (ANN) training data by separating a single-nuclide spectrum from a spectrum in which multiple nuclides are mixed.

**Background Art**

A whole-body counter is an instrument for measuring the level of radioactive contamination by detecting gamma rays emitted from radionuclides when a radiation worker at a nuclear power plant is internally exposed.

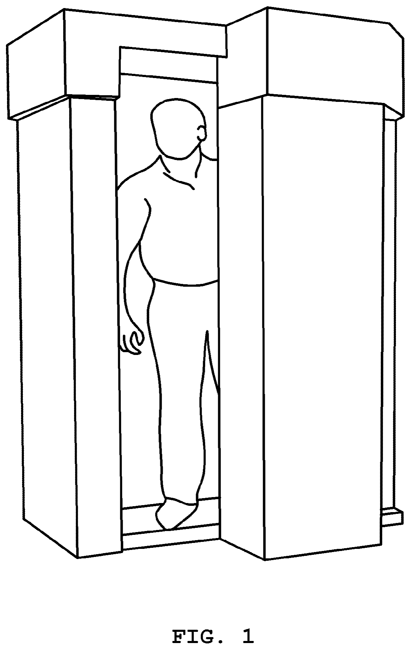

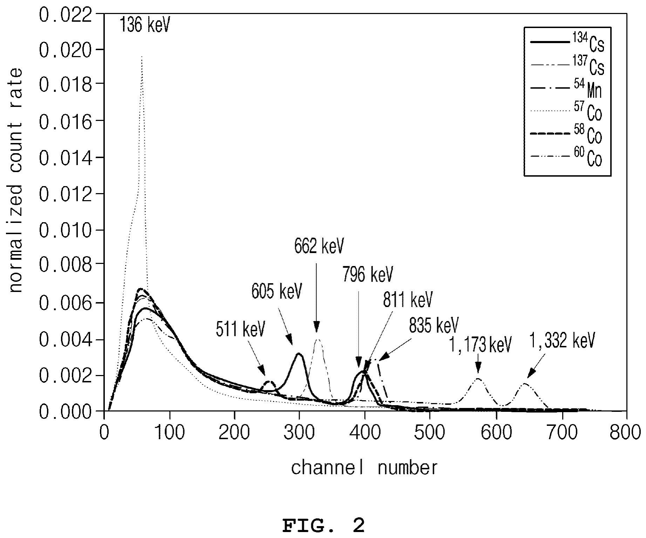

FIG. 1 shows the FastScan manufactured by Technologies, Inc., which is the most widely used as a whole-body counter in nuclear power plants. The FastScan includes two NaI (TI) detectors, each having dimensions of $7.6 \times 12.7 \times 40.6$ cm$^3$, embedded therein at upper and lower positions in series. FIG. 2 shows gamma-ray spectra of $^{134}$Cs, $^{137}$Cs, $^{54}$Mn, $^{57}$Co, $^{58}$Co, and $^{60}$Co measured by the whole-body counter.

Table 1 corresponds to the category "V. fission and activation products" related to the lungs in ANSI/HPS N13.30-2011 "VPerformance Criteria for Radiobioassay" of the United States, which serves as the performance criterion for whole-body contamination testing. When interfering nuclides ($^{134}$Cs, $^{137}$Cs) are present, it is required that results of measuring any two nuclide selected among $^{54}$Mn, $^{57}$Co, $^{58}$Co, and $^{60}$Co satisfy the root mean square error (RMSE)$\leq 0.25$.

[Table 1]

| Measurement category | Type | Radionuclide | MTL$^{ab}$ |
|---|---|---|---|
| V. Fission and activation products | Lung | Any two: $^{54}$Mn $^{58}$Co $^{60}$Co | 3 kBq(81 nCi) each |
| | | $^{144}$Ce or $^{57}$Co | 30 kBq(0.81 μCi) 3 kBq(81 nCi) |
| | | Plus: $^{134}$Cs$^c$ $^{137}$Cs$^c$ | See footnote c. |
| a: The upper bound of the testing range shall not exceed 20 times the MTL | | | |
| b: The difference in activity levels between the highest and lowest radioisotopes (RIs) in any one test phantom shall be within a factor of three of each other | | | |
| c: These RIs shall be present in the phantom in appropriate amounts for interference but shall not be tested | | | |

Herein, RMSE is expressed as $RMSE = \sqrt{B_r^2 + S_B^2} \leq 0.25$

$$B_r = \sum_{i=1}^{N} \frac{B_{ri}}{N} \quad B_{ri} = \frac{A_i - A}{A} \quad S_B = \sqrt{\frac{\sum (B_{ri} - B_r)^2}{N-1}}$$

Herein, $B_r$ denotes the relative bias, $B_{ri}$ denotes the individual relative bias, $S_b$ denotes the relative precision, $A_i$ denotes the I-th measured activity, and N denotes the number of measurements.

The NaI (TI) detector of the FastScan exhibits excellent gamma-ray detection efficiency, allowing for a short measurement time of approximately 1 to 3 minutes. However, due to its bad resolution, the NaI (TI) detector may fail to satisfy the RMSE criterion when a nuclide to be measured is affected by interfering nuclides. For example, in FIG. 2, when the 835 keV peak of $^{54}$Mn or the 811 keV peak of $^{58}$Co overlaps with the 796 keV peak of the interfering nuclide $^{134}$Cs, the accuracy of peak analysis is reduced, resulting in an increased RMSE value.

To address this issue, one of the artificial intelligence technologies, an artificial neural network, is sometimes used to analyze a spectrum. However, it is difficult to obtain spectra for training the artificial neural network through actual measurements, so spectra may be obtained by combining single-nuclide spectra.

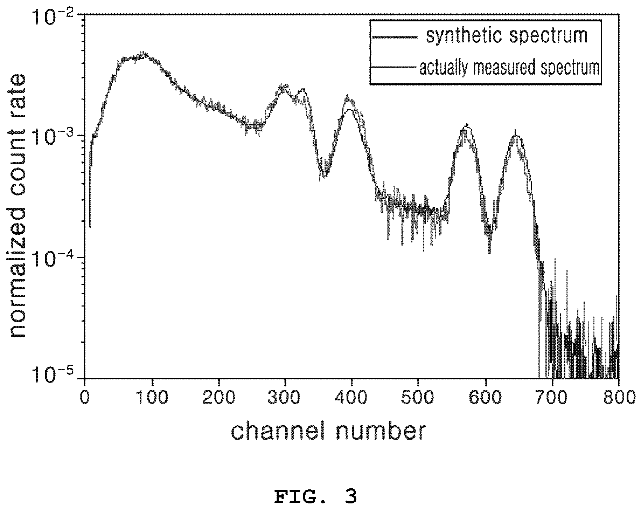

For example, the black line in FIG. 3 represents a synthetic spectrum obtained by combining single-nuclide spectra of $^{54}$Mn, $^{60}$CO, $^{134}$CS, and $^{137}$Cs at proportions of 0.1, 0.31, 0.24, and 0.35, respectively, and the red line represents an actually measured spectrum obtained by simultaneously measuring $^{54}$Mn, $^{60}$CO, $^{134}$Cs, and $^{137}$Cs.

[Document of Related Art]

[Patent Document] Korean Patent No. 2249120 (30 April 2021)

**Disclosure**

**Technical Problem**

The present disclosure is directed to providing a gamma spectrum separation system for a whole-body counter (WBC) for generating artificial neural network (ANN) training data, and a method using the gamma spectrum separation system, the system and the method detecting gamma rays emitted from radionuclides to measure the level of radioactive contamination when a radiation worker at a nuclear power plant is internally exposed.

**Technical Solution**

To achieve the above objective, the present disclosure includes: an efficiency calculation unit 100 configured to calculate an efficiency for each of channels A, B, and C of a whole-body counter; a count rate contribution amount calculation unit 200 configured to calculate a count rate contribution amount of each channel by multiplying the efficiency of each channel by a value obtained by multiplying a mixed source for generating the artificial neural network training data by a gamma-ray emission rate of each nuclide; and a normalization unit 300 configured to subtract the count rate contribution amount from the count rate of each channel measured by the nuclide and then perform normalization to obtain a normalized spectrum of the nuclide.

**Advantageous Effects**

According to the present disclosure, a single-nuclide spectrum can be separated from a spectrum in which multiple nuclides are mixed, and the single-nuclide spectrum can be used to generate a synthetic spectrum for artificial intelligence training.

**Description of Drawings**

FIG. 1 is a diagram showing a whole-body counter.
FIG. 2 is a graph showing gamma-ray spectra of a whole-body counter.
FIG. 3 is a graph showing comparison of a synthetic spectrum and an actually measured spectrum.
FIG. 4 is a graph showing a spectrum of $^{57}$Co and $^{60}$Co mixed with $^{58}$Co.
FIG. 5 is a result of obtaining a single spectrum of $^{58}$Co by removing $^{57}$Co and $^{60}$Co from a mixture of nuclides $^{58}$Co, $^{57}$CO, and $^{60}$Co.
FIG. 6 is a configuration diagram showing a gamma spectrum separation system for a whole-body counter (WBC) for generating artificial neural network (ANN) training data according to an embodiment of the present disclosure.
FIG. 7 is a schematic flow diagram showing a method using a gamma spectrum separation system for a whole-body counter (WBC) for generating artificial neural network (ANN) training data according to an embodiment of the present disclosure.

**Best Mode**

Hereinafter, the present disclosure will be described in detail with reference to the accompanying drawings. However, the present disclosure is not limited or restricted by exemplary embodiments thereof. The same reference numerals shown in the drawings indicate members that perform substantially the same function.

Objectives and effects of the present disclosure may be naturally understood or more apparent from the following description, and the objectives and the effects of the present disclosure are not limited to the following description. Also, in describing the present disclosure, if it is decided that a detailed description of the known art related to the present disclosure makes the subject matter of the present disclosure unclear, the detailed description will be omitted.

The present disclosure relates to a method of separating a single-nuclide spectrum from a mixed-nuclide spectrum to generate whole-body counter (WBC) artificial neural network (ANN) training data. <Table 3> shows the $^{58}$Co source purchased for generating artificial neural network training data, and according to the source certificate, not only $^{58}$Co at 6,570 Bq but also $^{57}$Co at 723 Bq and $^{60}$Co at 670 Bq are mixed.

Table 3 shows the amount of radioactivity for each nuclide in the $^{58}$Co source certificate.

[Table 3]

| Nucli de | Refere nce activi ty (Bq) | Gamma -ray emiss ion rate | Refere nce date | Half-life (days ) | Measurem ent date | Elaps ed time | Curre nt activ ity (Bq) |
|---|---|---|---|---|---|---|---|
| $^{58}$Co | 6,570 | 1.293 | 16 | 70.85 | 15 | 30 | 4,899 |
| $^{57}$Co | 723 | 0.962 | August 2022 | 271.8 1 | Septembe r 2022 | days | 670 |
| $^{60}$Co | 670 | 2 | | 1925. 28 | | | 663 |

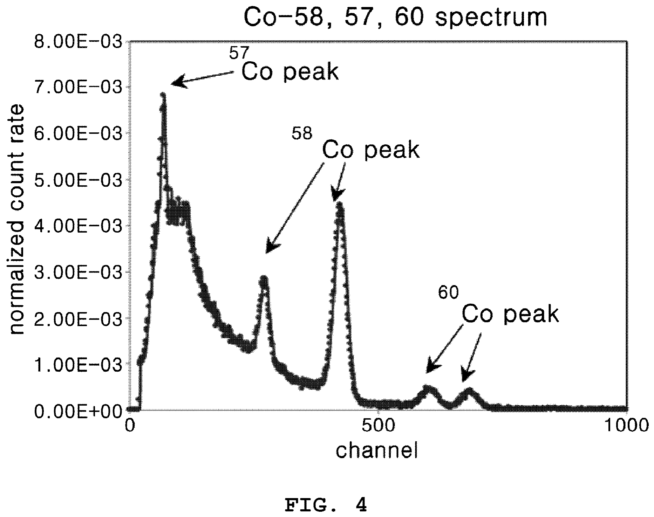

FIG. 4 shows a result of normalizing a gamma spectrum obtained by measuring the nuclides in Table 3 by the whole-body counter 30 days after the reference date. FIG. 4 is a graph showing a spectrum of $^{57}$Co and $^{60}$Co mixed with $^{58}$Co.

Although nuclide-specific gamma peaks are separated, three nuclides are mixed at particular proportions with respect to a count rate of each channel.

The technical principle of a method of separating only $^{58}$Co from a spectrum in which $^{58}$Co, $^{57}$Co, and $^{60}$Co are mixed, which is the objective of the present disclosure, is as follows.

First, an efficiency of each channel of the whole-body counter for each of $^{57}$Co and $^{60}$Co is calculated.

Herein, $^{57}$Co and $^{60}$Co nuclides are single nuclides separately purchased from those in Table 3, and the radioactivity of other nuclides is not mixed.

Afterward, the activities of $^{57}$Co and $^{60}$Co mixed with $^{58}$Co are multiplied by the gamma-ray emission rates of the respective nuclides, and the results are multiplied by the efficiency of each channel of $^{57}$Co and $^{60}$Co, thereby calculating the count rate contribution amount of each channel of $^{57}$Co and $^{60}$Co mixed with $^{58}$Co. The count rate contribution amount of each channel of $^{57}$Co and $^{63}$Co is subtracted from the count rate of each channel measured from the three nuclides in Table 3 and then normalization is performed to obtain a single spectrum of $^{58}$Co required for artificial neural network training.

A detailed description of the configuration and the overall operation principles of the present disclosure is as follows.

To obtain only a normalized spectrum of nuclide A from a spectrum of a mixture of nuclides A, B, and C, it is necessary to obtain the count rate and the efficiency of each channel of nuclide B and nuclide C.

Afterward, the count rate contribution amount of each channel of nuclide B and nuclide C is subtracted from the count rate of each channel of the mixture of nuclides A, B, and C and then normalization is performed to obtain the normalized spectrum of nuclide A.

A) A method of calculating the efficiency of each channel of nuclide B is as follows.

An example of the method of calculating the efficiency ($\in_i$) of each channel of nuclide B is as follows. Herein, it is assumed that nuclide B is $^{57}$Co and nuclide C is $^{60}$Co.

$$\in_i = \frac{C_i}{A \cdot Y}$$

Herein, $C_i$ denotes the net count rate (cps) of each channel, A denotes the nuclide-specific activity (Bq), and Y denotes the nuclide-specific gamma-ray emission rate.

The whole-body counter divides the gamma-ray energy in the range of 0 to 2 MeV into 512 channels or 1,024 channels for measurement. For example, when the count rate of channel 20 for the single nuclide $^{57}$Co at 3,826 Bq is 0.1739 cps, the gamma-ray emission rate (Y) of $^{57}$Co is 0.9628, and the efficiency of channel 20 for $^{57}$Co is 4.72E-5, accordingly. In the same manner, the efficiency for each of channels 1 to 1,024 may be calculated.

B) A method of obtaining a count rate contribution amount of each channel of nuclide B from a mixture of nuclides A, B, and C is as follows.

The count rate ($C_{i\_e}$) contribution amount of each channel of nuclide B from the mixture of nuclides A, B, and C may be obtained using the following equation.

$$C_i = \varepsilon_i \cdot A_B \cdot Y_B$$

Herein, $\varepsilon_i$ denotes the efficiency of each channel (i) of nuclide B, $A_B$ denotes the activity of nuclide B in the mixture of nuclides A, B, and C, and $Y_B$ denotes the gamma-ray emission rate of nuclide B.

Since in Table 3, the activity of $^{57}$Co mixed with $^{58}$Co is 670 Bq and the efficiency ($\varepsilon_{20}$) of channel 20 of the whole-body counter is 4.72E-5, $C_{20}$ = 670 Bq $\times$ 0.9628 $\times$ 4.72E-5 = 3.04E-2 cps is obtained.

Using the above method, in addition to $^{57}$Co, the count rate contribution amount of each channel of $^{60}$Co mixed with $^{58}$Co may be obtained.

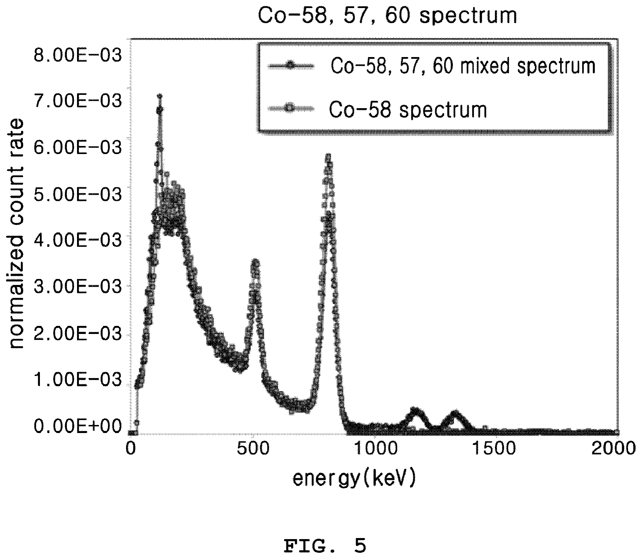

To obtain the normalized spectrum of nuclide A, the count rate contribution amount of each channel of nuclides B and C is subtracted from the count rate of each channel of nuclide A and then normalization is performed. FIG. 5 is a result of obtaining a single spectrum of $^{58}$Co by removing $^{57}$Co and $^{60}$Co from a mixture of nuclides $^{58}$Co, $^{57}$Co, and $^{60}$Co. FIG. 5 is a graph showing a comparison before and after the removal of a spectrum of $^{57}$Co and $^{60}$Co.

According to the present disclosure, since the $^{58}$Co source has the half-life of 70.85 days, which is significantly shorter than the half-life (271.81 days) of $^{57}$Co and the half-life (1,925.28 days) of $^{60}$CO, the proportions of $^{57}$Co and $^{60}$Co increase over time. By using the present disclosure, a single-nuclide spectrum can be separated from a spectrum in which multiple nuclides are mixed, and the single-nuclide spectrum can be used to generate a synthetic spectrum for artificial intelligence training.

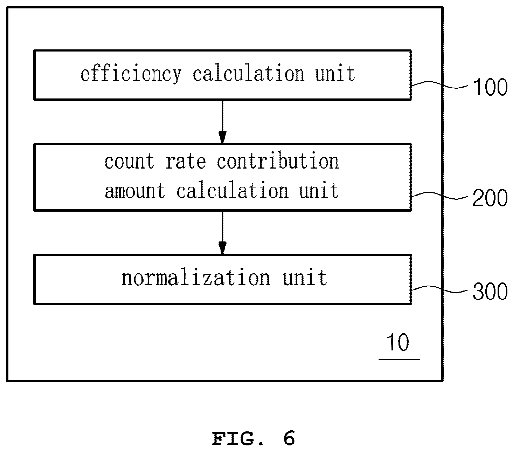

FIG. 6 is a configuration diagram showing a gamma spectrum separation system for a whole-body counter (WBC) for generating artificial neural network (ANN) training data according to an embodiment of the present disclosure.

As shown in FIG. 6, a gamma spectrum separation system 10 for a whole-body counter (WBC) for generating artificial neural network (ANN) training data according to the present embodiment includes an efficiency calculation unit 100, a count rate contribution amount calculation unit 200, and a normalization unit 300.

The gamma spectrum separation system 10 for the whole-body counter (WBC) is a device that analyzes and classifies nuclides using an artificial neural network. This system is largely divided into three parts.

The efficiency calculation unit 100 serves to calculate the gamma-ray detection efficiency for each of channels A, B, and C of the WBC device. The calculated efficiency values may be used by the count rate contribution amount calculation unit later.

The efficiency calculation unit 100 according to the embodiment calculates the gamma-ray detection efficiency for each of channels A, B, and C of the WBC device. Through this, the gamma-ray detection efficiency to be used later by the count rate contribution amount calculation unit may be calculated.

In the WBC, channels A, B, and C detect gamma rays in different energy ranges. The detection efficiencies of these channels may be calculated by comparing measured data with actual gamma-ray emission quantity. That is, the gamma ray emission quantity is calculated on the basis of measured values obtained by irradiating the device with gamma rays predetermined in advance, whereby the detection efficiency for each of channels A, B, and C is calculated.

Herein, in further description, the efficiencies for channels A, B, and C of the whole-body counter (WBC) are values representing the efficiencies of gamma rays detected in the respective channels, and may be calculated using the measured count rate (cps) of each channel, the nuclide-specific activity (Bq), and the nuclide-specific gamma-ray emission rate.

First, the measured count rate (cps) of each channel is a value representing the intensity of gamma rays measured by the whole-body counter (WBC). The activity (Bq) of a nuclide represents the amount of radiation energy of the nuclide emitted per unit time, and the nuclide-specific gamma-ray emission rate represents the number of gamma rays emitted from the nuclide per unit time.

On the basis of this information, a value obtained by multiplying the mixed source for generating artificial neural network training data by the gamma-ray emission rate of each nuclides is multiplied by an efficiency of each channel to calculate a count rate contribution amount of each channel. Through this, the count rate value contributed by each nuclide in the corresponding channel may be obtained. Next, the count rate contribution amount of each channel is subtracted from the count rate of each channel measured by the nuclide and the result is normalized to obtain a normalized spectrum of the nuclide. Through this, the normalized count rate value contributed by each nuclide in the corresponding channel may be obtained. Finally, on the basis of this value, the efficiencies for channels A, B, and C of the whole-body counter (WBC) may be calculated. The efficiency of gamma rays detected in each channel is calculated by dividing the net count rate (cps) of each channel by the nuclide-specific activity (Bq) and the nuclide-specific gamma-ray emission rate, and then dividing the result by the count rate contribution amount of each channel. Through this, the gamma-ray detection efficiencies in channels A, B, and C may be calculated.

This efficiency calculation operation is used in the count rate contribution amount calculation unit and the normalization unit of the gamma spectrum separation system, and the accuracy of the efficiency calculation operation is very important to obtain accurate result values for operations of the count rate contribution amount calculation unit and the normalization unit. Therefore, in the gamma spectrum separation system for the WBC, a process of precisely performing and verifying the efficiency calculation operation takes place.

The count rate contribution amount calculation unit 200 calculates how much each nuclide contributes to the count rate in each channel by multiplying the mixed source by the gamma-ray emission rates of the respective nuclides and then multiplying the efficiency of each channel. Through this, the results are used for the analysis of the count rate of each nuclide.

The count rate contribution amount calculation unit 200 according to the present embodiment is an element used in the gamma spectrum separation system 10 for the whole-body counter (WBC). This element calculates the count rate contribution amount of gamma rays emitted from each nuclide required for generating artificial neural network training data.

To this end, first, the values obtained by multiplying the mixed source by the gamma-ray emission rates of respective nuclides are multiplied by the gamma-ray detection efficiencies for channels A, B, and C calculated by the efficiency calculation unit, thereby calculating count rate contribution amounts of the respective channels. The calculated count rate contribution amounts are added for all the nuclides and channels, and then normalization is performed for each nuclide to obtain count rate contribution amounts. Through this, gamma-ray spectrum data for generating artificial neural network training data may be configured.

The count rate contribution amount calculation unit serves as a critical element in the gamma spectrum separation system for the WBC. In order to generate artificial neural network training data, it is necessary to accurately determine the count rate contribution amount of gamma rays emitted from each nuclide. To this end, accurate calculation and measurement processes are required. Accordingly, the count rate contribution amount calculation unit performs precise calculation and measurement operations, and through this, accurate data required for generating artificial neural network training data may be obtained.

The count rate contribution amount calculation unit will be further described as follows.

Gamma-ray spectra measured by the whole-body counter are a combination of gamma rays emitted from multiple nuclides. Therefore, in order to train the artificial neural network, the gamma-ray spectra need to be separated by nuclide to generate training data. The count rate contribution amount calculation unit multiplies efficiencies of respective channels by the values obtained by multiplying the mixed source by the gamma-ray emission rates of the respective nuclides, thereby calculating count rate contribution amounts of the respective channels. Herein, the count rate refers to a value representing the degree to which gamma rays are absorbed when passing through a particular material, and is calculated using the cps value measured in each channel of the gamma-ray spectrum and the value of the nuclide-specific activity (Bq). Accordingly, if the count rate and the cps value of each nuclide are known, the count rate contribution amount contributed by each nuclide in the corresponding channel may be obtained. The calculated count rate contribution amount of each nuclide is used to generate a nuclide-specific gamma-ray spectrum for training the artificial neural network.

The normalization unit 300 subtracts the count rate contribution amount obtained by the count rate contribution amount calculation unit from the count rate of each channel, and then normalize the result to calculate a normalized spectrum of a nuclide. This is used for generating training data and is required for training an artificial neural network model that classifies nuclides. Through this process, the gamma spectrum separation system for the WBC is used to analyze and classify nuclides, and detect and analyze radioactive contamination of nuclei.

The normalization unit 300 according to the present embodiment subtracts the count rate contribution amount from the count rate of each channel measured for each nuclide, and then performs normalization for each channel to obtain a normalized spectrum of a nuclide.

First, the count rate contribution amount of each channel is subtracted from the count rate of each channel measured by the count rate contribution amount calculation unit 200. This calculated value is a value resulting from performing correction for the count rate contribution amount, and in order to obtain accurate spectrum data for each nuclide, correction to which the count rate contribution amount is applied is required.

Next, the corrected count rate value is normalized for each channel. Normalization is an operation of dividing the count rate value of each channel by the maximum value, and is to reduce the difference in count rate values between nuclides. The normalized values are used to generate artificial neural network training data, and the data is used to identify each nuclide in the gamma spectrum separation system for the WBC.

The normalization unit 300 serves as a critical element in generating artificial neural network training data. In order to obtain accurate spectrum data, correction of the count rate contribution amount and normalization are required. Through this, artificial neural network training data is generated, and the gamma spectrum separation system for the WBC may accurately identify nuclides on the basis of the artificial neural network training data.

The normalization unit will be further described as follows.

The count rate of each channel measured by the whole-body counter (WBC) is a value representing gamma-ray absorption in each channel, and this value is the sum of effects caused by the activities of multiple nuclides on a measurement device. Accordingly, if the count rate contribution amount of each channel contributed by each nuclide is subtracted from the measured count rate of each channel, a count rate of each channel with the influence of each nuclide removed is obtained. To this end, the count rate contribution amount of each nuclide needs to be known in advance. This count rate contribution amount is a value calculated by the "count rate contribution amount calculation unit" described above.

Accordingly, when the count rate contribution amount of each nuclide is known and subtracted from the measured count rate of each channel, the count rate of each channel with the count rate contribution amount of each channel contributed by each nuclide removed is obtained. By adding all the count rates of respective channels obtained in this way, a normalized spectrum of a nuclide is obtained. This spectrum is a value obtained by correcting the intensity of gamma rays emitted from each nuclide, and is generated to enable comparison between nuclides.

That is, the normalization unit subtracts the count rate contribution amount of each channel from the count rate of each channel, and the calculated value is a value obtained by performing correction for the count rate contribution amount. In order to obtain accurate spectrum data for each nuclide, correction to which the count rate contribution amount is applied is performed and the corrected count rate value is normalized for each channel. Through this, accurate spectrum data for each nuclide may be obtained. Accordingly, the characteristics of gamma rays emitted from each nuclide can be accurately analyzed, and the data measured by the whole-body counter (WBC) can be more accurately analyzed.

Through this, the gamma spectrum separation system for the whole-body counter for generating artificial neural network training data according to the present embodiment can obtain more accurate and highly reliable spectrum data for each nuclide, which can more accurately derive diagnostic results from the whole-body counter and greatly assist in patient health management.

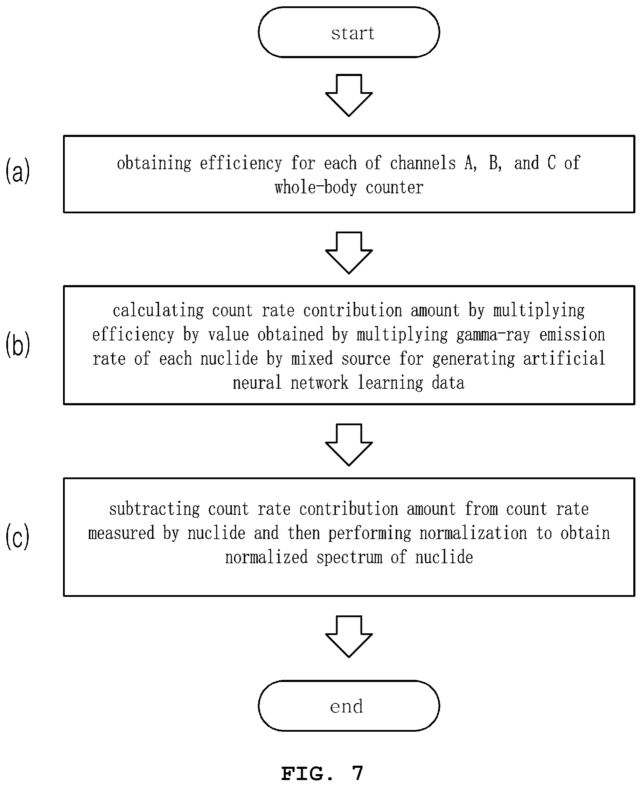

FIG. 7 is a schematic flow diagram showing a method using a gamma spectrum separation system for a whole-body counter (WBC) for generating artificial neural network (ANN) training data according to an embodiment of the present disclosure.

As shown in FIG. 7, a method using a gamma spectrum separation system (hereinafter, referred to as the system) for a whole-body counter (WBC) for generating artificial neural network (ANN) training data according to an embodiment of the present disclosure includes: (a) obtaining a efficiency for each of channels A, B, and C of a whole-body counter; (b) calculating a count rate contribution amount by multiplying the efficiency by a value obtained by multiplying a gamma-ray emission rate of each nuclide by a mixed source for generating the artificial neural network training data; and (c) subtracting, by the system, the count rate contribution amount from a count rate measured by the nuclide and then performing normalization to obtain a normalized spectrum of the nuclide.

In step (a), the efficiency calculation unit calculates gamma-ray detection efficiency for each of channels A, B, and C of the whole-body counter.

In step (b), the count rate contribution amount calculation unit calculates the count rate contribution amount by multiplying the value, obtained by multiplying the mixed source by the gamma-ray emission rate of each nuclide, by the gamma ray detection efficiency for each of channels A, B, and C calculated by the efficiency calculation unit.

In step (c), the normalization unit subtracts the count rate contribution amount from the count rate measured by the count rate contribution amount calculation unit, wherein a calculated value therefrom is a value obtained by performing correction for the count rate contribution amount, and in order to obtain accurate spectrum data for each nuclide, performs correction to which the count rate contribution amount is applied and normalizes a corrected count rate value for each of the channels.

## Claims

1. A gamma spectrum separation system for a whole-body counter (WBC) for generating artificial neural network training data, the system comprising:

   an efficiency calculation unit configured to calculate an efficiency for each of channels A, B, and C of a whole-body counter;
   a count rate contribution amount calculation unit configured to calculate a count rate contribution amount of each channel by multiplying the efficiency of each channel by a value obtained by multiplying a mixed source for generating the artificial neural network training data by a gamma-ray emission rate of each nuclide; and
   a normalization unit configured to subtract the count rate contribution amount from the count rate of each channel measured by the nuclide and then perform normalization to obtain a normalized spectrum of the nuclide.

2. The system of claim 1, wherein the efficiency calculation unit is configured to calculate gamma-ray detection efficiency

EP 4 675 317 A1

for each of the channels A, B, and C of the whole-body counter.

3.  The system of claim 1, wherein the count rate contribution amount calculation unit is configured to calculate each count rate contribution amount by multiplying the value obtained by multiplying the mixed source by the gamma-ray emission rate of each nuclide, by gamma-ray detection efficiency for each of the channels A, B, and C calculated by the efficiency calculation unit.

4.  The system of claim 1, wherein the normalization unit is configured to subtract each count rate contribution amount from the count rate measured by the count rate contribution amount calculation unit, wherein a calculated value therefrom is a value obtained by performing correction for the count rate contribution amount, and in order to obtain accurate spectrum data for each nuclide, perform correction to which the count rate contribution amount is applied and normalize a corrected count rate value for each of the channels.

5.  A method using a gamma spectrum separation system for a whole-body counter (WBC) for generating artificial neural network training data, the method comprising:

(a) obtaining an efficiency for each of channels A, B, and C of a whole-body counter;
(b) calculating a count rate contribution amount by multiplying the efficiency by a value obtained by multiplying a gamma-ray emission rate of each nuclide by a mixed source for generating the artificial neural network training data; and
(c) subtracting, by the system, the count rate contribution amount from a count rate measured by the nuclide and then performing normalization to obtain a normalized spectrum of the nuclide.

FIG. 1

FIG. 2

FIG. 3

FIG. 4

FIG. 5

efficiency calculation unit — 100

count rate contribution amount calculation unit — 200

normalization unit — 300

10

FIG. 6

start

(a) obtaining efficiency for each of channels A, B, and C of whole-body counter

(b) calculating count rate contribution amount by multiplying efficiency by value obtained by multiplying gamma-ray emission rate of each nuclide by mixed source for generating artificial neural network learning data

(c) subtracting count rate contribution amount from count rate measured by nuclide and then performing normalization to obtain normalized spectrum of nuclide

end

FIG. 7

## INTERNATIONAL SEARCH REPORT

| International application No. |
|---|
| **PCT/KR2024/003590** |

**A. CLASSIFICATION OF SUBJECT MATTER**

**G01T 1/163**(2006.01)i; **G01T 1/167**(2006.01)i; **G01T 7/00**(2006.01)i; **G06N 3/04**(2006.01)i; **G06N 3/08**(2006.01)i

According to International Patent Classification (IPC) or to both national classification and IPC

**B. FIELDS SEARCHED**

Minimum documentation searched (classification system followed by classification symbols)

G01T 1/163(2006.01); G01T 1/00(2006.01); G01T 1/02(2006.01); G01T 1/167(2006.01); G01T 1/20(2006.01); G01T 1/38(2006.01); G01T 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 핵종(nuclide), 계수율(count rate), 기여(contribution), 인공신경망(artificial neural network), 및 효율(efficiency)

**C. DOCUMENTS CONSIDERED TO BE RELEVANT**

| Category* | Citation of document, with indication, where appropriate, of the relevant passages | Relevant to claim No. |
|---|---|---|
| Y | CHO, Moonhyung et al. Performance testing of a FastScan whole body counter using an artificial neural network. Nuclear Engineering and Technology. 08 March 2022 (online publication date). vol. 54, pp. 3043-3050.<br>See pages 3043-3049 and figures 1-9. | 1-5 |
| Y | JP 08-285944 A (ALOKA CO., LTD.) 01 November 1996 (1996-11-01)<br>See paragraphs [0019], [0024] and [0032]-[0035] and figure 2. | 1-5 |
| A | KUMAR, R. et al. OxGamma: A MATLAB based application for the analysis of gamma-ray spectra. Radiation Measurements. 25 April 2022 (online publication date). vol. 154, pp. 1-8.<br>See pages 1-7 and figures 1-5. | 1-5 |
| A | KR 10-2021-0048843 A (KOREA INSTITUTE OF NUCLEAR SAFETY) 04 May 2021 (2021-05-04)<br>See paragraphs [0032]-[0088] and figures 1-16. | 1-5 |
| A | KR 10-2008-0015497 A (CANA INC.) 19 February 2008 (2008-02-19)<br>See paragraphs [0010]-[0035] and figures 1-4. | 1-5 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 July 2024** | **17 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003590**

| Patent document cited in search report | | | Publication date (day/month/year) | Patent family member(s) | | | Publication date (day/month/year) |
|---|---|---|---|---|---|---|---|
| JP | 08-285944 | A | 01 November 1996 | None | | | |
| KR | 10-2021-0048843 | A | 04 May 2021 | KR | 10-2313427 | B1 | 15 October 2021 |
| KR | 10-2008-0015497 | A | 19 February 2008 | KR | 10-0930681 | B1 | 09 December 2009 |

Form PCT/ISA/210 (patent family annex) (July 2022)

**EP 4 675 317 A1**

## REFERENCES CITED IN THE DESCRIPTION

**Patent documents cited in the description**

- KR 2249120